# EUROPÄISCHE PATENTSCHRIFT

(11) **EP 1 510 244 B1**
(45) Veröffentlichungstag und Bekanntmachung des Hinweises auf die Patenterteilung: **23.01.2008**
(21) Anmeldenummer: 04019554.7
(22) Anmeldetag: 18.08.2004
(51) Int. Cl.: B01D 53/84

(54) **Mikrobielles Verfahren und Anlage zur Reinigung von Gasen**
Microbial process and apparatus for the purification of gases
Procédé microbien et dispositif pour la purification des gaz

(30) Priorität: 28.08.2003 DE 10340049
(43) Veröffentlichungstag der Anmeldung: 02.03.2005
(73) Patentinhaber: MicroPro GmbH, 39245 Gommern (DE)
(72) Erfinder: Wagner, Martin, 39245 Gommern (DE)
(74) Vertreter: Schuster, Müller & Partner

(56) Entgegenhaltungen:
- EP-A- 0 811 416
- DE-A- 3 300 402
- GB-A- 2 300 824
- US-A- 4 760 027
- US-A- 5 354 545
- US-A- 5 747 331
- DATABASE WPI Week 198342, Derwent Publications Ltd., London, GB; Class D16, AN 1983-791923 & JP 58 152 488 A (SUMITOMO JUKI EN) 10 September 1983

## Beschreibung

### Stand der Technik

Die Erfindung geht aus von einem mikrobiellen Verfahren und einer Anlage zur Reinigung von Gasen nach der Gattung der Hauptansprüche 1 und 9, nämlich zur Reduzierung des äußerst geruchsintensiven und korrosiven Schwefelwasserstoffs sowie anderer Geruchsstoffe, wie Mercaptane, Dimethylsulfid und Methanthiol, aus Gasen, beispielsweise Biogas. Schwefelwasserstoff ist neben anderen Verunreinigungen bis zu 6000 ppm im Biogas enthalten. Besonders bei der Vergärung eiweißreicher Substanzen entsteht ein erheblicher Anteil an Schwefelwasserstoff (H₂S). Hohe Schwefelwasserstoffkonzentrationen im Biogas führen zu Problemen bei der Verwertung des Biogases, beispielsweise in einem Blockheizkraftwerk. Bei der Verbrennung dieses Gases entsteht Schwefelfdioxid (SO₂). Schwefeldioxidemissionen sind unerwünscht und können speziell beim Einsatz von Abgaskatalysatoren schnell deren Vergiftung hervorrufen. Zu hohe Konzentrationen an H₂S im Biogas bewirken bei der Verbrennung oftmals Überschreitungen bestehender Emissionsgrenzwerte. Zudem führt H₂S bzw. SO₂ zu Korrosion an den Armaturen und Motorbauteilen. Sie lassen das Motoröl schnell versäuern und erfordern damit häufigen Motorölwechsel. Die meisten Hersteller von BHK's, in denen hauptsächlich Biogas verbrannt wird, legen einen Grenzwert für den Schwefelwasserstoffgehalt im Biogas von 100 bis 500 ppm fest.
Aus technischer und umweltschutzrechtlicher Sicht ist es zwingend erforderlich, den Anteil von H₂S im Biogas so niedrig wie möglich zu halten.

Neben rein chemischen Technologien zur Reduzierung des H₂S-Gehalts im Biogas wurde in der Vergangenheit ein aerobes mikrobiologisches Verfahren entwickelt, das wesentlich einfacher und kostengünstiger als die chemischen Technologien sein soll. Hierzu wird das aus dem Fermenter einer Biogasanlage austretende Biogas vor seiner Verbrennung unter ständiger Luftzufuhr durch eine biologische Entschwefelungskolonne geleitet. In diesem Biofilter befindet sich ein Trägermaterial, auf dem Schwefelbakterien angesiedelt sind. Um die Bakterien mit Nährstoff zu versorgen und ein pH-Wert neutrales Regime zu gewährleisten, muss die Schüttung regelmäßig mit einer entsprechenden Nährflüssigkeit, beispielsweise Gülle, Fermenterablauf o. ä. versorgt werden. Dies erfolgt kontinuierlich oder in Intervallen, wobei die Spülflüssigkeit gleichzeitig auch den aus dem H₂S entstandenen Schwefel aus dem Trägermaterial ausspült. Die Gewährleistung eines pH-Wertes des Systems im Bereich von 6 bis 8 ist zunächst für eine gute Löslichkeit des Schwefelwasserstoffes und damit natürlich auch für eine hohe H₂S-Umsetzung erforderlich. Darüber hinaus wird aber auch die Umsetzung in elementaren Schwefel gewährleistet und eine für die Schwefelbakterien ungünstigere Umwandlung in Schwefelsäure, die das sauere Milieu noch verstärkt, verhindert (Schneider, R.: Mikrobiologische Reduktion des H₂S-Gehaltes von Biogas, ATZ EVUS, Sulzbach-Rosenberg, Manuskript zum Vortrag, gehalten auf der Tagung "Biogasanlagen - Anforderungen zur Luftreinhaltung" am 19.10.2002 im Bayrischen Landesamt für Umweltschutz, Augsburg).

Der Nachteil dieser Lösung besteht in der Notwendigkeit des regelmäßigen, meistens stündlichen Spülens der Kolonne, um den Prozess optimal ablaufen zu lassen. Auch wenn die Spülung in kurzen Intervallen, bei optimiertem Betrieb reichen wenige Minuten pro Stunde, erfolgt, ist das Spülen zeit- und energieaufwendig. Außerdem sinkt bei jedem Spülvorgang die Abbaurate des Schwefelwasserstoffs beträchtlich, steigt aber nach einer gewissen Zeit wieder an, ohne jedoch den ursprünglichen Wert wieder zu erreichen. Trotz des aufwändigen Spülens gelingt es mit dieser Anlage nicht, die H₂S-Konzentration dauerhaft unter 100 ppm zu senken. Des Weiteren wird durch den direkten Eintrag von Luft in den Biogasstrom die Zusammensetzung des Biogases nachteilig verändert. Es entstehen schwefelhaltige Abprodukte, die aufwändig entsorgt werden müssen.

Bekannt sind ferner ein Verfahren und eine Vorrichtung zur Reinigung von Gasen von schwerlöslichen gasförmigen Substanzen, insbesondere schwefelhaltigen Substanzen aus Abgasen mit Hilfe von Mikroorganismen, die in der Lage sind, derartige Substanzen abzubauen. Die Mikroorganismen können Schwefelkohlenstoff und Schwefelwasserstoff abbauen. Das Verfahren besteht darin, das Gas in Form von kleinen Blasen mit den Mikroorganismen in Kontakt zu bringen, wobei der Austausch an der Oberfläche der Blasen erfolgt. Falls erforderlich wird das Gas in einen weiteren Bioreaktor geleitet. Die Vorrichtung besteht aus einer mikrobiellen Suspensionskammer, die ein unteres Flüssigkeitsfüllniveau und ein Zuleitungsrohr für das zu reinigende Gas aufweist, sowie mindestens einem Bioreaktor, der in direkter Verbindung mit der Suspensionskammer steht. Die Packung oder Füllung des genannten Reaktors besteht aus immobilisierten Mikroorganismen, die in der Lage sind, die schwerlösliche gasförmige Substanze zu reduzieren (US 5,747 331).

Im Verfahren der GB-A-2.300.824 wird ein Gemisch von Thiobacillus thiooxidans und Thiobacillus ferrooxidans zur Umsetzung von Schwefelwasserstoff und anderen Geruchtsstoffen verwendet. Ein neutraler pH-Bereich wird angestrebt, damit die von den Bakterien aus H₂S hergestellte H₂SO₄ anschließend mit CaCO₃ zu CaSO₄ umgesetzt wird.

Die DE-A-33.00.402 beschreibt ein Verfahren in dem H₂S mit einer wäßrigen Lösung eines Metallsalzes (z.B. Eisensulfat) in Kontakt gebracht wird. Dabei entsteht Metallsulfid, das durch Fällung und Filtration aus der Lösung entfernt und mit Thiobacillus ferrooxidans zu Sulfat umgesetzt wird.

### Die Erfindung und ihre Vorteile

Das erfindungsgemäße Verfahren mit den kennzeichnenden Merkmalen des Hauptanspruches sowie die erfindungsgemäße Anlage nach Anspruch 9 haben demgegenüber den Vorteil, dass der H₂S-Gehalt unter 0,1 ppm gesenkt werden kann und die Nährsalzlösung nicht so häufig ausgetauscht werden muss. Außerdem werden auch andere Geruchsstoffe, wie Mercaptane, Dimethylsulfid und Methanthiol, aus dem Gas beseitigt. Mit dem Verfahren wird quasi ein geruchsfreies Gas produziert. Es ist kein ständiger Zusatz von Chemikalien erforderlich. Die Regeneration der Nährsalzlösung erfolgt in Abhängigkeit von der H₂S-Belastung des Biogases und der durchgeleiteten Menge selbständig.

Die enthaltenen Thiobakterien sind chemolithoautotroph, d.h. sie gewinnen ihre zum Leben notwendige Energie durch Oxidation chemischer Verbindungen unter Nutzung anorganischer Wasserstoffdonatoren (z.B. H₂S). Erfindungsgemäß wird im Verfahren ein Keimgemisch aus speziellen Stämmen von Thiobacillus thiooxidans und Thiobacillus ferrooxidans eingesetzt. Das komplexe Wirkprinzip wird durch nachfolgende Reaktionen beschrieben:
Thiobacillus thiooxidans:
   Im Gas enthaltener Schwefelwasserstoff wird nach dargestellter Reaktion mit Eisen-(III)-hydroxid gebunden (1). Gebildetes Eisensulfid (FeS) wird durch Thiobacillus thiooxidans zu Eisen-(II)-sulfat oxidiert (2).
Thiobacillus ferrooxidans:
   Das in (2) und (4) gebildete Eisen-(II)-sulfat wird im extrem sauren Milieu von Thiobacillus ferrooxidans nach (3) zum H₂S-Sorptionsmittel Eisen-(III)-hydroxid (1) oxidiert und somit das Eisen-(III)-sulfat regeneriert.

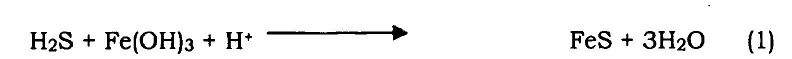

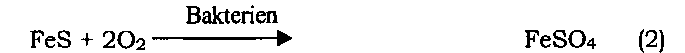

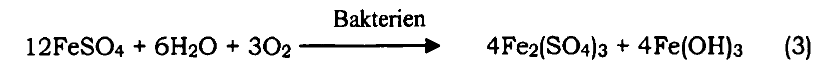

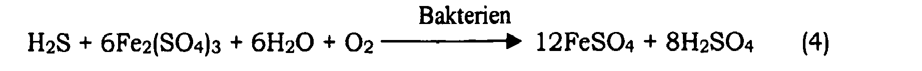

Die in Reaktion (4) gebildete Schwefelsäure (H₂SO₄) wird partiell neutralisiert. Eine pH-Wert Regelung kann beispielsweise durch eine automatisch oder manuell gesteuerte Zugabe von Ammoniak vorgesehen werden, um pH-Werte größer 1,0 aufrechtzuerhalten. Im Langzeitbetrieb wird es so in Abhängigkeit vom H₂S-Gehalt der Gase zu einer Aufkonzentration der Nährsalzlösung mit Ammoniumsulfat kommen. Bei Erreichen von Schwellwerten, die die Aktivität der Thiobakterien vermindern, wird ein Teilwechsel der Nährsalzlösung vorgenommen.

Durch das mikrobielle Wachstum wird außerdem der CO₂- und Ammoniakgehalt im zu reinigenden Gas gesenkt, was einerseits zu der hervorragenden Ökobilanz der Anlage beiträgt, zum anderen indirekt den Kohlenwasserstoffanteil (Methangehalt) im Gasstrom um 5-10% erhöht.

Ein weiterer Vorteil besteht darin, dass kein Eintrag von Luft, also kein Eintrag von Sauerstoff, Stickstoff und Kohlenstoffdioxid in den Gasstrom erfolgt, so dass die Zusammensetzung der Kohlenwasserstoffe erhalten bleibt. Dadurch wird das Verfahren auch für industrielle Gaswäschen interessant, bei denen eine Veränderung der Gaszusammensetzung vermieden werden muss.

In einer vorteilhaften Ausgestaltung der Erfindung wird die Nährflüssigkeit vor dem Kontakt mit den Thiobakterien mit einem den Sauerstoff tragenden Medium, beispielsweise Luft, angereichert. Diese Verfahrensweise dient der Bereitstellung einer gleichmäßig mit dem Luftsauerstoff durchmischten Nährflüssigkeit.

In einer weiteren vorteilhaften Ausgestaltung der Erfindung wird die mit Sauerstoff angereicherte Nährsalzlösung im Gemisch mit dem zu reinigenden Gas in den Reaktor eingebracht. Dadurch wird eine gute Verteilung des Sauerstoffs und des Gases in dem Reaktor und damit eine günstige Kontaktierung dieser Stoffgemische mit den Thiobakterien erreicht.

In einer weiteren vorteilhaften Ausgestaltung der Erfindung wird die mineralische Nährsalzlösung als Aerosol in den mindestens einen Reaktor eingebracht. Dadurch kann bei gleichbleibender Reinigungsleistung der Bedarf an Nährsalzlösung reduziert werden.

In einer weiteren vorteilhaften Ausgestaltung der Erfindung werden zur Bindung der bei dem Reinigungsprozess entstehenden Schwefelverbindungen als Sorptionsmittel Eisenhydroxid, Eisenchlorid oder Schrott verwendet.

In einer weiteren vorteilhaften Ausgestaltung der Erfindung wird die im Prozess gebildete und der Anlage entnommene Schwefelsäure mittels Ammoniaklösung neutralisiert. Dabei ist es vorteilhaft, die hierbei aus der Lösung ausfallende Eisenverbindungen nach deren Separation in die Anlage zurückzuführen. Es erfolgt also eine Rückgewinnung der Sorptionsmittel.

Eine im Sinne einer weitergehenden Verwertung der beim Prozess anfallenden Produkte vorteilhafte Ausgestaltung der Erfindung ist die Gewinnung von Ammoniumsulfat aus der klaren Restlösung, das beispielsweise als Düngemittel Anwendung findet. Durch diese Aufarbeitungsschritte wird das erfindungsgemäße Verfahren im Vergleich zu anderen Gasreinigungsverfahren zu einem abproduktfreien Entschwefelungsverfahren.

Die erfindungsgemäße Anlage besteht aus einem Reaktor, in dem immobilisierte Thiobakterien von einem von einer mineralischen Nährsalzlösung gebildeten feuchten Milieu umgeben sind. Der Reaktor wird sowohl von dem zu reinigenden Gas als auch einem die Thiobakterien mit Sauerstoff versorgenden Medium durchströmt. Mit dem Reaktor ist mindestens ein weiterer Reaktor über Verbindungsleitungen verbunden, in dem ebenfalls das von der mineralischen Nährsalzlösung gebildete feuchte Milieu vorhanden ist. Die Verbindungsleitungen verbinden die beiden Reaktöre in der Weise, dass ihre im Bodenbereich gelegenen Einströmbereiche jeweils mit dem Ausströmbereich des jeweils anderen Reaktors verbunden sind, die sich im oberen Bereich der Reaktoren befinden. Wenn nunmehr das zu reinigende Gas in den einen Reaktor und das den Sauerstoff tragende Medium in den bzw. die anderen Reaktoren mit Druck eingebracht wird, beginnt die Nährsalzlösung in beiden Behältern in eine einheitliche Richtung, und zwar nach oben, und durch die Verbindungsleitungen wieder nach unten zu strömen. Dabei kommt es zu einer sehr guten Durchmischung der Nährsalzlösung mit Sauerstoff, ohne dass dabei das zu reinigende Gas in seiner Zusammensetzung verändert wird, und in der Folge zu einer gleichmäßigen Versorgung der Thiobakterien mit Sauerstoff. Diese gute Durchmischung wird in einer weiteren vorteilhaften Ausgestaltung der Anlage noch dadurch unterstützt, dass die Eintrittsstutzen für das Gas und das den Sauerstoff tragende Medium nicht direkt in die beiden Reaktoren, sondern in die jeweilige Verbindungsleitung (Perkulationssystem), die in diese mündet, eingebracht sind.

In einer weiteren vorteilhaften Ausgestaltung der Erfindung sind auch in dem bzw. den weiteren Reaktoren Thiobakterien immobilisiert, wodurch die Reinigungsleistung der Anlage weiter erhöht wird.

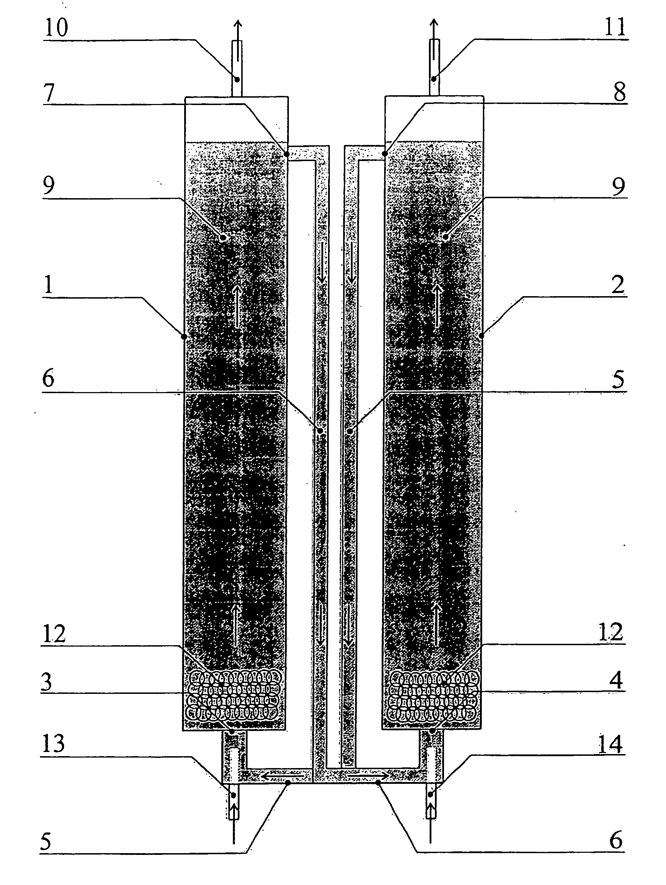

Weitere Vorteile und vorteilhafte Ausgestaltungen der Erfindung sind der nachfolgenden Beispielbeschreibung, der Zeichnung und den Ansprüchen entnehmbar.

### Zeichnung

Ein Ausführungsbeispiel der Erfindung ist in der Zeichnung dargestellt und im Folgenden näher beschrieben. Die Fig. zeigt das Schema der erfindungsgemäßen Anlage, durch die das zu reinigende Gas hindurchgeleitet wird. Sie besteht aus einem zylindrischen Reaktor 1 und einem in den Abmessungen diesem gleichenden Reaktor 2. Jeweils in ihrem Boden weisen die Reaktoren 1 und 2 Eintrittsöffnungen 3 bzw. 4 auf, in die Verbindungsleitungen 5 und 6 einmünden. Kurz unterhalb der Abdeckungen der Reaktoren 1 und 2 befindet sich jeweils eine Austrittsöffnung 7 bzw. 8, wobei die Austrittsöffnung 7 des Reaktor 1 über die Verbindungsleitung 6 mit der Eintrittsöffnung 4 des Reaktors 2 und die Austrittsöffnung 8 des Reaktors 2 über die Verbindungsleitung 5 mit der Eintrittsöffnung 3 des Reaktors 1 verbunden ist. Die Verbindungsleitungen 5 und 6 verbinden somit die beiden Reaktoren 1 und 2 nach dem Prinzip der kommunizierenden Gefäße. Die Anlage ist im vorliegenden Beispiel bis oberhalb der Austrittsöffnungen 7, 8 mit einer definierten mineralischen Nährsalzlösung 9 befüllt. Der Reaktor 1 besitzt in seiner Abdeckung einen Gasauslassstutzen 10, während der Reaktor 2 an der gleichen Stelle einen Abluftauslassstutzen 11 aufweist. Die beiden Reaktoren 1 und 2 sind mit Füllkörpern 12 gefüllt, die im vorliegenden Beispiel aus Polyethylen bestehen. Sie dienen der Vergrößerung der Aufwuchsfläche für die Thiobakterien sowie zur besseren Verteilung des zu reinigenden Gases und fördern dadurch den Stoffübergang. Das zu reinigende Gas tritt über einen Gaseintrittsstutzen 13 unterhalb der Eintrittsöffnung 3 über die Verbindungsleitung 5 in den Reaktor 1 ein. An der gleichen Stelle des Reaktors 2, also unterhalb seiner Eintrittsöffnung 4, ist ein Lufteintrittsstutzen 14 in die Verbindungsleitung 6 eingebracht, über den Luft in diesen eingebracht wird.

Nachfolgend soll die Wirkungsweise der Erfindung beschrieben werden.

Das zu reinigende Gas wird unter Druck über den Gaseintrittsstutzen 13 und die Verbindungsleitung 5 in den Reaktor 1 eingebracht, wobei es sich bereits mit der sich in der gesamten Anordnung einschließlich der Verbindungsleitungen 5 und 6 befindenden Nährsalzlösung 9 vermischt. Gleichzeitig wird ebenfalls mittels Druck Luft über den Lufteintrittsstutzen 14 in den Reaktor 2 eingebracht, wobei sich die Luft ebenfalls mit der Nährsalzlösung 9 vermischt. Wie bereits erwähnt, benötigen die Thiobakterien Sauerstoff, was im vorliegenden Beispiel durch den Lufteintrag in die Nährsalzlösung 9 gewährleistet wird. Durch den Eintrag von Gas bzw. Luft jeweils am unteren Ende der Reaktoren 1 bzw. 2 wird die Nährsalzlösung 9 kontinuierlich in eine Richtung, und zwar innerhalb der beiden Gefäße immer aufwärts, bewegt (Perkolator-Prinzip). Dadurch kommt es zum Austausch der Nährsalzlösungen innerhalb der beiden Reaktoren 1 und 2, so dass kontinuierlich Sauerstoff zu den Thiobakterien gelangt, ohne dass das Gas in seiner Zusammensetzung verändert wird. Die Dimensionierung der Anlage hängt von der Menge des zu reinigenden Gases ab. Das gereinigte Gas verlässt den Reaktor 1 über den Gasauslassstutzen 10, die Abluft entweicht über den Abluftauslassstutzen 11 aus dem Reaktor 2.

### Bezugszahlenliste

- 1: Reaktor
- 2: Reaktor
- 3: Eintrittsöffnung
- 4: Eintrittsöffnung
- 5: Verbindungsleitung
- 6: Verbindungsleitung
- 7: Austrittsöffnung
- 8: Austrittsöffnung
- 9: Nährsalzlösung
- 10: Gasauslassstutzen
- 11: Abluftauslassstutzen
- 12: Füllkörper
- 13: Gaseintrittsstutzen
- 14: Lufteintrittsstutzen

## Patentansprüche

1. Mikrobielles Verfahren zur Reduzierung von Schwefelwasserstoff sowie anderen Geruchsstoffen, wie Mercaptanen, Dimethylsulfid und Methanthiol, aus Gasen in einem aeroben Prozess, bei dem das zu reinigende Gas durch mindestens einen mit Mikroorganismen beimpften Reaktor (1) hindurchgeleitet wird, in dem sich zur Versorgung der Mikroorganismen mit Nährstoffen ein feuchtes Milieu, beispielsweise eine Nährflüssigkeit (9), befindet, das ein Sorptionsmittel zur Aufnahme der beim Reinigungsprozess anfallenden Stoffe aufweist,
**dadurch gekennzeichnet,**
**dass** als Sorptionsmittel Eisenverbindungen verwendet werden, die die Schwefelverbindungen des zu reinigenden Gases binden,
**dass** der Abbau der störenden Substanzen und gleichzeitig auch die Regenerierung der Eisenverbindungen durch ein Gemisch chemolithoautotropher Mikroorganismen der Gattung Thiobacillus erfolgt, das aus Stämmen der Arten Thiobacillus thiooxidans und Thiobacillus ferrooxidans besteht und
**dass** das feuchte Milieu als eine mit Sauerstoff angereicherte mineralische Nährsalzlösung (9) in den mindestens einen Reaktor (1) kontinuierlich eingebracht wird.

2. Mikrobielles Verfahren nach Anspruch 1,
**dadurch gekennzeichnet,**
**dass** die das feuchte Milieu bildende Nährsalzlösung vor dem Kontakt mit dem Gemisch chemolithoautotropher Mikroorganismen der Gattung Thiobacillus mit einem den Sauerstoff tragenden Medium angereichert wird.

3. Mikrobielles Verfahren nach Anspruch 1 oder 2,
**dadurch gekennzeichnet,**
**dass** die das feuchte Milieu bildende, mit Sauerstoff angereicherte mineralische Nährsalzlösung (9) im Gemisch mit dem zu reinigenden Gas in den Reaktor (1) eingebracht wird.

4. Mikrobielles Verfahren nach einem der Ansprüche 1 bis 3,
**dadurch gekennzeichnet,**
**dass** die mineralische Nährsalzlösung (9) als Aerosol in den mindestens einen Reaktor (1) eingebracht wird.

5. Mikrobielles Verfahren nach Anspruch 1,
**dadurch gekennzeichnet,**
**dass** als Sorptionsmittel Eisenhydroxid, Eisenchlorid oder Schrott verwendet wird.

6. Mikrobielles Verfahren nach Anspruch 5,
**dadurch gekennzeichnet,**
**dass** die im Prozess gebildete Schwefelsäure partiell, neutralisiert wird, so dass eine Trennung des Eisenhydroxids von der Nährsalzlösung (9) erfolgt.

7. Mikrobielles Verfahren nach Anspruch 6,
**dadurch gekennzeichnet,**
**dass** das aus der Nährsalzlösung (9) separierte Eisenhydroxid in den Prozess rezykliert wird.

8. Mikrobielles Verfahren nach Anspruch 6 und 7,
**dadurch gekennzeichnet,**
**dass** aus einer Teilmenge der Nährsalzlösung (9) Ammoniumsulfat gewonnen wird.

9. Anlage zur Reduzierung von Schwefelwasserstoff sowie anderen Geruchsstoffen, wie Mercaptanen, Dimethylsulfid und Methanthiol, aus Gasen, die aus mindestens einem Reaktor (1) besteht, in dem sich immobilisierte Thiobakterien in einem von einer Nährflüssigkeit (9) gebildeten feuchten Milieu befinden, wobei der Reaktor (1) von dem zu reinigenden Gas sowie einem die Thiobakterien mit Sauerstoff versorgenden Medium durchströmt wird,
**dadurch gekennzeichnet,**
**dass** mit jedem Reaktor (1) mindestens ein weiterer, ebenfalls das feuchte Milieu aufweisender Reaktor (2) über Verbindungsleitungen (5; 6) kommunizierend verbunden ist, wobei die Verbindungsleitungen (5; 6) jeweils den unteren Einströmbereich des Reaktors (1) mit dem oberen Ausströmbereich des bzw. der weiteren Reaktoren (2) und den unteren Einströmbereich des bzw. der weiteren Reaktoren (2) mit dem oberen Ausströmbereich des Reaktors (1) verbinden und das die Thiobakterien mit Sauerstoff versorgende Medium im Gemisch mit einer mineralischen Nährsalzlösung von unten in den Reaktor (1) eintritt.

10. Anlage nach Anspruch 9,
**dadurch gekennzeichnet,**
**dass** mit der in den bzw. die kommunizierenden Reaktoren (2) mündenden Verbindungsleitung (6) der Eintrittsstutzen (14) für das den Sauerstoff enthaltende Medium verbunden ist.

11. Anlage nach Anspruch 9 und 10,
**dadurch gekennzeichnet,**
**dass** mit der in den Reaktor (1) mündenden Verbindungsleitung (5) der Eintrittsstutzen (13) für das zu reinigende Gas verbunden ist.

12. Anlage nach einem der Ansprüche 9 bis 11,
**dadurch gekennzeichnet,**
**dass** sich auch in dem bzw. den weiteren Reaktoren (2) immobilisierte Thiobakterien befinden.

## Claims

1. Microbial process for the reduction of hydrogen sulphide and other odorous substances such as mercaptans, dimethyl sulphide and methane thiol, from gases in an aerobic process in which reactor the gas to be purified is passed through at least one reactor (1) inoculated with microorganisms in which a moist medium, e.g. a nutrient broth (9), is present for supplying the microorganisms with nutrients, which medium exhibits a sorption agent for absorbing the substances arising during the purification process,
**characterised in**
**that** iron compounds are used as sorption agent which bind the sulphur compounds of the gas to be purified,
**that** the degradation of the undesirable substances and, simultaneously, also the regeneration of the iron compounds take place by means of a mixture of chemolithoautotrophic microorganisms of the genus of Thiobacillus, which mixture consists of strains of the type of Thiobacillus thiooxidans and Thiobacillus ferrooxidans and
**that** the moist medium is introduced continuously into the at least one reactor (1) as a mineal nutrient salt solution (9) enriched with oxygen.

2. Microbial process according to claim 1
**characterised in**
**that** the nutrient salt solution forming the moist medium is enriched with a medium carrying the oxygen before contact with the mixture of chemolithoautotrophic microorganisms of the genus Thiobacillus.

3. Microbial process according to claim 1 or 2
**characterised in**
**that** the oxygen-enriched mineral nutrient salt solution (9) forming the moist medium is introduced into the reactor (1) in mixture with the gas to be purified.

4. Microbial process according to one of claims 1 to 3
**characterised in**
**that** the mineral nutrient salt solution (9) is introduced into the at least one reactor (1) as an aerosol.

5. Microbial process according to claim 1
**characterised in**
**that** the iron hydroxide, iron chloride or scrap is used as sorption agent.

6. Microbial process according to claim 5
**characterised in**
**that** the sulphuric acid formed in the process is partially neutralised such that a separation of the iron hydroxide from the nutrient salt solution (9) takes place.

7. Microbial process according to claim 6
**characterised in**
**that** the iron hydroxide separated from the nutrient salt solution (9) is recycled into the process.

8. Microbial process according to claims 6 and 7
**characterised in**
**that** ammonium sulphate is obtained from a partial quantity of the nutrient salt solution (9).

9. Plant for reducing hydrogen sulphide and other odorous substances such as mercaptans, dimethyl sulphide and methane thiol, from gases which plant consists of at least one reactor (1) in which immobilising thiobacteria are present in a moist medium formed by a nutrient broth (9), the gas to be purified and a medium supplying the thiobacteria with oxygen passing through the reactor (1)
**characterised in**
**that** at least one further reactor (2) also exhibiting the moist medium is connected in a communicating manner via connecting lines (5; 6) with the reactor (1), the connecting lines (5; 6) connecting the lower inflow area of the reactor (1) with the upper discharge area of the one or further reactor(s) (2) and the lower inflow area of the one or the further reactors (2) with the upper discharge area of the reactor (1) and the medium supplying the thiobacteria with oxygen entering the reactor (1) in mixture with a mineral nutrient salt solution from below.

10. Plant according to claim 9
**characterised in**
hat the inlet nipple (14) for the medium containing the oxygen is connected with the connecting line (6) entering the one or several communicating reactors (2).

11. Plant according to claim 9 and 10
**characterised in**
**that** the inlet nipple (13) for the gas to be purified is connected with the connecting line (5) entering the reactor (1).

12. Plant according to one of claims 9 to 11
**characterised in**
**that** immobilised thiobacteria are present also in the one or the further reactors (2).

## Revendications

1. Procédé microbien destiné à la réduction du sulfure d'hydrogène et d'autres composés odorants comme les mercaptans, le diméthylsulfure et le méthanthiol contenus dans des gaz, le processus étant de nature aérobie et le gaz à purifier étant passé à travers un réacteur (1) contenant une culture microbienne ainsi qu'un milieu humide destiné à l'alimentation des microorganismes, par exemple un milieu de culture liquide (9), ledit milieu humide comportant un agent de sorption pour absorber les matières produites lors du processus de purification,
**caractérisé en ce que**
lesdits agents de sorption mis en oeuvre sont des composés de fer qui absorbent les composés soufrés du gaz à purifier,
la dégradation des substances gênantes est assurée, en même temps que la régénération des composés de fer, par un mélange de microorganismes chimiolithoautotrophes du genre Thiobacillus, ledit mélange étant constitué des espèces Thiobacillus thiooxidans et Thiobacillus ferrooxidans, et
ledit milieu humide se présentant sous forme d'une solution de sels nutritifs minéraux (9) et étant introduit de manière continue dans au moins un réacteur (1)

2. Procédé microbien selon la revendication 1,
**caractérisé en ce que**
ladite solution de sels nutritifs constituant le milieu humide est enrichie d'un milieu porteur d'oxygène avant d'être mis en contact avec ledit mélange de microorganismes chimiolithoautotrophes du genre Thiobacillus.

3. Procédé microbien selon les revendications 1 ou 2,
**caractérisé en ce que**
ladite solution de sels nutritifs minéraux (9) enrichie d'oxygène et constituant le milieu humide est introduite dans le réacteur (1) en mélange avec le gaz à purifier.

4. Procédé microbien selon l'une quelconque des revendications 1 à 3,
**caractérisé en ce que**
ladite solution de sels nutritifs minéraux (9) est introduite sous forme d'un aérosol dans au moins un réacteur (1).

5. Procédé microbien selon la revendication 1
**caractérisé en ce que**
l'agent de sorption mis en oeuvre est de l'hydroxyde de fer, du chlorure de fer ou de la ferraille.

6. Procédé microbien selon la revendication 5
**caractérisé en ce que**
l'acide sulfurique formé lors du processus est partiellement neutralisé, permettant une séparation de l'hydroxyde de fer de la solution de sels nutritifs (9).

7. Procédé microbien selon la revendication 6
**caractérisé en ce que**
ledit hydroxyde de fer séparé de la solution de sels nutritifs (9) est recyclé pour être réintroduit dans le processus.

8. Procédé microbien selon les revendications 6 et 7
**caractérisé en ce que**
du sulfate d'ammonium est récupéré à partir d'une partie de la solution de sels nutritifs (9).

9. Installation destinée à la réduction du sulfure d'hydrogène et d'autres composés odorants comme les mercaptans, le diméthylsulfure et le méthanthiol contenus dans des gaz, ladite installation étant constituée d'au moins un réacteur (1) contenant des thiobactéries immobilisées dans un milieu humide constitué par un milieu de culture liquide (9), ledit réacteur étant traversé par un débit comportant le gaz à purifier ainsi qu'un milieu destiné à alimenter les thiobactéries en oxygène,
**caractérisée en ce que**
chaque réacteur (1) communique, à travers des conduits de connexion (5 ; 6), avec au moins un autre réacteur (2) comportant également ledit milieu humide, les conduits de connexion (5 ; 6) reliant, respectivement, la zone d'entrée inférieure du réacteur (1) à la zone de sortie supérieure de l'autre / des autres réacteur(s) (2) et la zone d'entrée inférieure de l'autre / des autres réacteur(s) (2) à la zone de sortie supérieure du réacteur (1), le milieu destiné à alimenter les thiobactéries en oxygène formant un mélange avec une solution de sels nutritifs minéraux, ledit mélange étant introduit dans le réacteur (1) par le bas.

10. Installation selon la revendication 9,
**caractérisée en ce que**
l'ajutage (14) destiné à introduire le milieu contenant de l'oxygène est relié au conduit de connexion (6) qui débouche dans le(s) réacteur(s) communiquant(s) (2).

11. Installation selon les revendications 9 et 10,
**caractérisée en ce que**
l'ajutage (13) destiné à introduire le gaz à purifier est relié au conduit de connexion (5) qui débouche dans le réacteur (1).

12. Installation selon les revendications 9 à 11,
**caractérisée en ce que**
l'autre / les autres réacteur(s) (2) contient / contiennent également des thiobactéries immobilisées.
